# EUROPÄISCHE PATENTSCHRIFT

(11) **EP 2 629 917 B1**
(45) Veröffentlichungstag und Bekanntmachung des Hinweises auf die Patenterteilung: **15.04.2020**
(21) Anmeldenummer: 11771117.6
(22) Anmeldetag: 14.10.2011
(51) Int. Cl.: B23F 21/14, B23F 1/06, B23F 5/20

(54) **ZAHNFRÄSER UND VERFAHREN ZUM FRÄSEN DER ZÄHNE VON ZAHNGETRIEBEELEMENTEN**
TOOTH MILLING CUTTER AND METHOD FOR MILLING THE TEETH OF TOOTHED GEAR ELEMENTS
FRAISE POUR DENT ET PROCÉDÉ DE FRAISAGE DES DENTS D'ÉLÉMENTS D'ENGRENAGE À DENTS

(30) Priorität: 22.10.2010 DE 102010042835
(43) Veröffentlichungstag der Anmeldung: 28.08.2013
(73) Patentinhaber: Sandvik Intellectual Property AB, 811 81 Sandviken (SE)
(72) Erfinder: SCHERBARTH, Stefan, 74321 Bietigheim-Bissingen (DE)
(74) Vertreter: WSL Patentanwälte Partnerschaft mbB
(86) Internationale Anmeldenummer: PCT/EP2011/068036
(87) Internationale Veröffentlichungsnummer: WO 2012/052367

(56) Entgegenhaltungen:
- WO-A1-03/089203
- WO-A1-2006/053854
- DE-A1- 2 234 854
- DE-U1-202010 002 303
- US-A- 1 516 524
- US-A1- 2009 162 155

## Beschreibung

Die vorliegende Erfindung betrifft ein Verfahren zum Fräsen einer Reihe von Zähnen eines Zahngetriebeelementes mit geradlinigem Zahnverlauf, mit einem Fräser, der um eine Fräserachse drehbar ist und der an seiner Peripherie austauschbare Schneideinsätze aufweist, die derart angeordnet sind, dass sie beim Heranführen des Fräsers an das Zahngetriebeelement in die Zahnlücken zwischen benachbarten Zähnen eingreifen bzw. diese Zahnlücken erzeugen.

Der nächstliegende Stand der Technik für den Gegenstand der Ansprüche 1, 12 und 14 ist in Dokument US 1 516 524 beschrieben.

Ein Fräser mit den Merkmalen des Oberbegriffs von Anspruch 11 ist ebenfalls aus der US 1,516,524 bekannt. Ein weiterer Fräser ist beispielsweise bekannt aus der DE 10 2008 063 858. Dieser bekannte Fräser ist dafür vorgesehen, nach oder bei dem Eintauchen in die jeweilige Zahnlücke entlang des Zahnes, d. h. parallel zum Zahnrücken, zeilenweise bewegt zu werden, wobei die Fräserachse nach einem solchen Zeilendurchlauf verkippt wird, um parallel eine neue Zeile abzufahren. Auf dieser Weise entstehen zum Zahnrücken parallel verlaufende Streifen eines Zahnprofils. Je nach der Zahl und Dichte der dabei überstrichenen Zeilen, die sich jeweils durch ein mehr oder weniger stark ausgeprägtes Verkippen der Fräserachse relativ zu dem zu fräsenden Zahn ergeben, entsteht dadurch eine Zahnkontur, die leicht facettiert ist. Der Vorteil dieses bekannten Fräsers liegt allerdings darin, dass es, im Gegensatz zu anderen herkömmlichen Fräsverfahren, mit einem solchen Verfahren grundsätzlich möglich ist, mit ein und demselben Fräser unterschiedliche Zahnprofile herzustellen, die in einem sehr großen Bereich variieren können, so dass es nicht notwendig ist, den Fräser zu wechseln, wenn eine andere Zahnform herzustellen ist. Insbesondere können mit diesem Fräser und dem beschriebenen Verfahren auch Bogenverzahnungen hergestellt werden.

Die Schneidkanten des dabei verwendeten Fräsers erstrecken sich dazu jeweils um einen von 90° deutlich abweichenden Winkel relativ zur Fräserachse, d. h. diese Schneidkanten liegen nicht in einer senkrecht zu der Fräserachse ausgerichteten Ebene.

Zahngetriebe weisen in der Praxis sehr häufig auch Zähne mit einem geraden Zahnverlauf auf, bei welchem also der Zahnrücken entlang einer Geraden verläuft. Dies schließt in gewissem Umfang auch noch sogenannte Schrägverzahnungen ein, bei denen der Zahnrücken jedenfalls in der Draufsicht von oben entlang einer Geraden verläuft, wobei er in einer Seitenansicht entweder keine oder nur eine schwache Krümmung aufweist, also beispielsweise bei Zahnrädern mit großem Durchmesser und/oder geringer Breite und einer großen Anzahl von Zähnen. Die Zahnbreite bzw. Zahnradbreite entspricht dabei der Länge des Zahnrückens (bei Schrägzahnungen noch multipliziert mit dem Cosinus des Winkels zwischen Zahnrücken und Achse des Zahnrades) Die vorliegende Erfindung zielt vor allem auf eine rationelle Herstellung solcher geraden Zahnverläufe bei gleichzeitig hoher Qualität des Profilverlaufs und der Profiloberfläche ab.

Darüber hinaus sind auch andere Verfahren zum Fräsen der Zähne von Zahngetriebeelementen bekannt, bei denen sogenannte Messerköpfe verwendet werden, die typischerweise auf einem Kreisbogen angeordnete und sich im Wesentlichen achsparallel erstreckende Schneidmesser aufweisen, welche in die jeweiligen Zahnlücken eingreifen, wobei der Schneidkantenverlauf entweder der individuellen Schneidmesser oder jeweils der Kontur von mehreren hintereinander angeordneten Messern dem gewünschten Zahnprofil bzw. Zahnlückenprofil entspricht.

Wiederum ein anderes Verfahren zur Zahnradherstellung als "Wälzverfahren" oder "Wälzfräsen" bekannt.

Derartige Verfahren sind aber relativ unproduktiv, wenn jeweils unterschiedliche Zahnprofile herzustellen sind, da im Falle der Messerköpfe die Schneidmesser jeweils speziell für ein bestimmtes Zahnprofil ausgebildet oder ausgerichtet sind und zur Herstellung eines neuen Profils jeweils gewechselt bzw. neu justiert werden müssen. Auch die Wälzfräser sind immer nur für ein bestimmtes Zahnprofil ausgelegt.

Mit dem erstgenannten Fräsverfahren ist es hingegen zwar möglich, eine große Zahl unterschiedlicher Zahnprofile mit ein und demselben Fräser herzustellen, jedoch besteht dabei immer der bereits erwähnte Nachteil, dass das Zahnprofil mehr oder weniger stark facettiert ist.

Gegenüber diesem Stand der Technik liegt der vorliegenden Erfindung die Aufgabe zugrunde, ein Verfahren zum Fräsen von Zähnen eines Zahngetriebeelementes mit den eingangs genannten Merkmalen zu schaffen, welches neben einer hohen Produktivität auch eine sehr exakte Zahnprofilform ohne Facettierung ermöglicht, und mit welchem auch relativ komplexe Zahnprofile ohne Wechsel oder Neujustierung der an dem Fräser montierten Schneideinsätze erzeugt werden können.

Diese Aufgabe wird dadurch gelöst, dass ein Fräser verwendet wird, bei welchem die Schneideinsätze in ihrem an dem Fräser montierten Zustand mindestens eine, sich radial und senkrecht zur Fräserachse erstreckende Schneidkante aufweisen, und dass beim Fräsen des Zahnprofils die Fräserachse in einer Ebene senkrecht zur Längserstreckung des Zahnrückens ausgerichtet und während des Eintauchens der um die Fräserachse rotierenden Schneideinsätze in die Oberfläche bzw. Zahnlücken eines Zahngetriebeelementes in jener Ebene über einen Winkel verschwenkt wird, der den Bereich aller Normalen zur gewünschten Profiloberfläche abdeckt.

Wie bereits erwähnt, ist das erfindungsgemäße Verfahren ist in erster Linie vorgesehen und vorteilhaft bei Zähnen mit geradlinigem Zahnverlauf, d. h. bei Zähnen, deren Zahnrücken entlang einer geraden Linie verläuft.

Derartige Zähne finden sich häufig an geradverzahnten Zahnrädern, Zahnstangen und anderen Zahngetriebeelementen. Auch einige schrägverzahnte Zahngetriebeelemente, insbesondere an Zahnstangen und Zahnrädern mit großem Radius und großer Zähnezahl, können mit Hilfe des erfindungsgemäßen Verfahrens hergestellt werden.
Gerade Zähne finden sich auch an sogenannten Kegelrädern, deren Hüllfläche eine Konusfläche ist, und zwar bis hin zu dem Extrem eines auf die Konusachse bezogenen Konuswinkels von 90°. Im letztgenannten Fall ist das Kegelrad ein flaches ebenes Zahnrad dessen Zähne sich radial oder auch unter einem Winkel zur radialen Richtung erstrecken können. Auch bei einem kleineren Konuswinkel können die geraden Zähne sich entweder in einer die Konusachse enthaltenden Ebene oder auch geneigt zu einer solchen Ebene erstrecken, wobei aber die Zahnrücken auf derselben Konusfläche liegen und wobei auch die Zahngrundfläche alle auf einer gemeinsamen Konusfläche liegen, die aber einen im Allgemeinen etwas kleineren Konuswinkel aufweist, so dass die Spitze der gedachten Konusfläche der Zahnrücken mit der Spitze der gedachten Konusfläche der Zahngrundflächen zusammenfällt. Die einzelnen Zähne haben dann auch eine variierende Zahnhöhe, die von dem radial weiter außen liegenden Abschnitt zu den radial inneren Abschnitten hin kontinuierlich abnimmt, entsprechend einer abnehmenden Spaltbreite zwischen zwei Konusflächen, deren Spitzen zusammenfallen, die aber unterschiedliche Konuswinkel haben. Grundsätzlich sind aber auch Kegelräder denkbar, bei denen die Zahngrundflächen denselben Konuswinkel definieren wie die Zahnrücken. In diesem Fall hätten die Zähne eine konstante, durchgehend gleiche Höhe. Da die Zähnezahl eines gegebenen Kegelrades konstant ist, wird das Zahnprofil vom radial außen liegenden zum radial innen liegenden Bereich hin schmaler.

Abhängig vom Durchmesser des Fräsers und abhängig von der Länge der jeweiligen Zähne (gemessen parallel zum Zahnrücken) kann das Zahnprofil in einem, ggf. auch in zwei oder mehreren Hüben bzw. Fräsvorgängen hergestellt werden.

Dabei bedeutet eine Verschwenkung der Fräserachse relativ zu dem Zahngetriebeelement nicht notwendigerweise eine tatsächliche Verschwenkung der Fräserachse im Raum, sondern es kann stattdessen auch das Zahngetriebeelement entsprechend verschwenkt werden, während die Fräserachse ihre Orientierung im Raum beibehält, um im Ergebnis eine relative Verschwenkung von Fräserachse zu Getriebeelement bzw. dem Zahnprofil desselben zu erhalten. Dies gilt insbesondere bei der Herstellung von Zahnrädern, die während der Herstellung der Verzahnung beispielsweise einfach um Ihre Radachse gedreht werden können, während der Fräser nur translatorisch bewegt wird und die Fräserachse ihre Ausrichtung beibehält.

Die Formulierung "Verschwenken der Fräserachse" umfasst deshalb im Sinne der vorliegenden Erfindung alle relativen Verschwenkbewegungen zwischen einem Zahngetriebeelement und einem Fräser unabhängig davon, welches der beteiligten Elemente tatsächlich auch im Raum bzw. an oder in einer entsprechenden Werkzeugmaschine verschwenkt wird.

Die translatorische Bewegung des Fräsers hat dabei im Allgemeinen unabhängig steuerbare axiale und radiale Komponenten in der Ebene senkrecht zum Zahnrücken und bezogen auf die Fräserachse.

Weitere bevorzugte Ausgestaltungen des erfindungsgemäßen Verfahrens, des zugehörigen Fräsers und des entsprechenden Schneideinsatzes ergeben sich aus den abhängigen Ansprüchen.

So ist gemäß einer Variante vorgesehen dass während des Eintauchens und Verschwenkens des rotierenden Fräsers und der Schneideinsätze das Zahngetriebeelement in Richtung der Reihe von Zähnen translatorisch verschoben oder um eine Achse des Zahngetriebeelementes gedreht wird, soweit das Zahngetriebeelement ein Zahnrad ist, wie dies oben bereits erläuztert wurde.

Gemäß einer weiteren Variante ist vorgesehen, dass die Schneideinsätze radial von dem Außenumfang des Fräsergrundkörpers hervorstehen und auf gegenüberliegenden Seiten parallele, zur Fräserachse senkrechte Schneidkanten aufweisen, wobei die gegenüberliegenden Schneidkanten jeweils nacheinander zur Erzeugung der an einer Zahnlücke gegenüberliegenden Flanken benachbarter Zähne verwendet werden.

Weiterhin ist in einer Variante vorgesehen, dass die Schneideinsätze zusätzlich eine Schneidkante (9) aufweisen, die in einer Zylinderfläche um die Fräserachse liegt und zur Fräserachse (21) parallele Komponenten aufweist, wobei diese zusätzliche Schneidkante zur Erzeugung des Zahnlückengrundes verwendet wird, indem der Fräser radial und senkrecht zu der durch zwei benachbarte Zahnrücken aufgespannten Ebene an das Getriebeelement herangeführt wird, wobei die Fräserachse jeweils senkrecht zu einem aktuell erzeugten Flächensegment des Zahnprofils steht

Konkret könnte ein erfindungsgemäßes Verfahren zur Herstellung des eine Zahnlücke begrenzenden Zahnprofils die folgenden Schritte aufweisen
a) Herstellung einer Nut in der zylindrischen Oberfläche eines Zahnradrohlinges (20), indem der Fräser mit dem Flugkreis der Schneideinsätze in einer der Zahnhöhe entsprechenden Tiefe parallel zu Achse (15) des Zahnrades (20) die Oberfläche auftrennt.
b) Herausziehen des Fräsers aus der Nut und Zustellen in einer axialen Position des Zahnrückens entlang welcher das Profil herzustellen ist an der Spitze eines die Nut bzw. eine entsprechende Zahnlücke begrenzenden Zahns, wobei das Zahnrad in eine Position gedreht und der Fräser entsprechend nachgeführt wird, so dass die Schneidkanten (8) des Fräsers senkrecht zu einer Normalen auf den radial äußeren Endabschnitt des Profils steht.
c) Drehen des Zahnrades und gleichzeitiges Nachführen des Fräsers durch axiale und radiale Translation, wobei die Fräserachse ihre Orientierung im Raum beibehält und das Profil des Zahnes kontinuierlich entsteht.

Bei einer entsprechende Zahnbreite bzw. einem geringen Verhältnis von Fräserdurchmesser zu Zahnbreite kann der Vorgang des Eintauchens und Verschwenkens in mindestens einer weiteren, zu der ersten Ebene parallelen Ebene wiederholt werden.

In einer Variante zur Herstellung von Kegelrädern ist vorgesehen, dass der Zahnrücken sich auf einer konischen Fläche erstreckt, die gegenüber der Achse der konischen Fläche geneigt ist.

Dabei kann der zur Konusachse gemessene Winkel der konischen Fläche zwischen 0 und 90 ° vorzugsweise zwischen 10° und 80° betragen..

Konkret könnte ein Verfahren zur Herstellung von Kegelrädern Verfahren die folgenden Schritte aufweisen :
a) Herstellen einer Nut in der konischen Oberfläche eines Zahnradrohlinges (20), indem der Fräser mit dem Flugkreis der Schneideinsätze in einer der Zahnhöhe entsprechenden Tiefe unter einem Neigungswinkel zu der Konusachse die Oberfläche auftrennt, welcher dem Konuswinkel des Zahngrundes eines herzustellenden Kegelrades entspricht.
b) Herausziehen des Fräsers aus der Nut und Zustellen des Fräserflugkreises in einer axialen Position des Zahnrückens, an welcher das Profil herzustellen ist, an der Spitze eines die Nut bzw. eine entsprechende Zahnlücke begrenzenden Zahns, wobei das Zahnrad um die Konusachse gedreht und der Fräser entsprechend nachgeführt wird, so dass die Schneidkanten (8) des Fräsers senkrecht zu einer Normalen auf dem radial äußeren Endabschnitt des Profils stehen.
c) Drehen des Zahnrades und gleichzeitiges Nachführen des Fräsers durch, bezogen auf die Fräserachse, axiale und radiale Translation, wobei die Fräserachse ihre Orientierung im Raum beibehält und das Profil des Zahnes kontinuierlich entsteht.

Dabei kann die auf die Fräserachse bezogene axiale und radiale Translation des Fräsers einer Bewegung unter annähernd konstantem Abstand zu einer auf der Konusachse liegenden Konusspitze der Konusflächen des herzustellenden Kegelrades entsprechen, wobei die Fräserachse sich jeweils parallel zu einer Tangente an die Konusfläche erstreckt.

Auch hier ist zu beachten, dass der Fräser im Raum sehr wohl nur eine translatorische, axiale und radiale Bewegung ausführen kann, wobei gleichzeitig auch das Kegelrad bzw. der Kegelradrohling gedreht wird.

Der entsprechende Fräser zum Herstellen von Zahnprofilen hat einen drehbaren, rotationssymmetrischen Grundkörper und Aussparungen an einer Peripherie des Grundkörpers, in welchen Schneideinsätze aufgenommen sind wobei die Schneideinsätze in einer Radialebene liegende und sich radial erstreckende Schneidkanten aufweisen, die sich in radialer Richtung um mindestens 6 mm über die Umfangsfläche des die Aussparungen aufweisenden Abschnittes des Grundkörpers hinaus erstrecken.

Das Zahnprofil wird demnach durch Schneidkanten erzeugt, die in einer Ebene senkrecht zur Fräserachse liegen.

Der entsprechende Schneideinsatz für einen Fräser zur Verwendung in einem Verfahren, wie es vorstehend erläutert wurde ist als tangentialer Wendeschneidsatz ausgebildet, der in der Draufsicht auf die Freifläche eine längliche Parallelogrammform mit einer die Breite um mindestens das Doppelte übersteigenden Länge und mit einer zentralen Befestigungsbohrung hat, wobei der Rand der Befestigungsbohrung von den Enden in Längsrichtung des Parallelogramms einen Abstand von mindestens 12 mm hat.

Dabei kann der Schneideinsatz beispielsweise über mindestens 8 mm seiner an den Längsenden des Parallelogramms vorgesehen Schneidabschnitte eine tangentiale Spanfläche mit zwei parallelen Scheidkanten und daran angrenzende Freiflächen haben, die mit der Spanfläche einen Winkel von weniger als 90 Grad einschließen.

Zusammenfassend lässt sich ein Verfahren zum Fräsen einer Reihe von Zähnen (eines Zahngetriebeelementes mit geradlinigem Zahnverlauf, wobei das Zahngetriebeelement ein Kegelrad ist, mit einem Fräser, der um eine Fräserachse drehbar ist und der an seiner Peripherie austauschbare Schneideinsätze aufweist, die derart angeordnet sind, dass sie beim Heranführen des Fräsers an das Zahngetriebeelement in die Lücken zwischen benachbarten Zähne eingreifen bzw. diese Lücken erzeugen, dadurch charakterisieren, dass ein Fräser verwendet wird, bei welchem die Schneideinsätze in ihrem an dem Fräser montierten Zustand mindestens eine sich radial und senkrecht zur Fräserachse erstreckende Schneidkante aufweisen, wobei beim Fräsen des Zahnprofils die Fräserachse in einer Ebene senkrecht zu einem die gewünschte Profiloberfläche begrenzenden Rand eines Zahnrückens ausgerichtet wird und während des Eintauchens der um die Fräserachse rotierenden Schneideinsätze in die Oberfläche bzw. Zahnlücken eines Zahngetriebeelementes in dieser Ebene über einen Winkelbereich verschwenkt wird, der den Bereich aller Normalen zur Profiloberfläche des herzustellenden Zahnes abdeckt.

Da sich die Schneideinsätze an dem Fräser auf einem Kreis bewegen, dessen Durchmesser von dem konkret verwendeten Fräser abhängt, und da bei dem erfindungsgemäßen Verfahren während des Verschwenkens der Fräserachse der tiefste Punkt der Zahnlücke durch die jeweiligen radial äußeren Schneikantenabschnitte der Schneideinsätze nur in einem Punkt der Zahnlücke erreicht wird, hängt es vom Durchmesser des Fräsers und von der Länge der jeweiligen Zähne ab, ob der Kreisbogen, entlang dessen die freien Enden der Schneideinsätze des Fräsers verlaufen, nahe genug am Grund der Zahnlücke liegen, um das vollständige Zahnprofil an beiden Enden des Zahns, d. h. über die volle Zahnbreite hinweg, zu bilden. Falls erforderlich, kann die Fräserache, wenn die Schneideinsätze ihre tiefste Eingriffsposition in der Zahnlücke haben, auch parallel zur Längserstreckung des Zahnrückens verschoben werden, um den Grund der Zahnlücke und etwaige Protuberanzen am Grund der Zahnlücke zu erzeugen, wobei gerade zur Erzeugung von hinterschnittenen Protuberanzen auch zwischen diesen zwei oder mehreren Fräsvorgängen (parallel zum Zahnrücken) die Fräserachse mehr oder weniger verkippt werden kann. Insbesondere kann durch einen solchen Fräsvorgang auch der erste Spalt bzw. die erste Lücke in der (zunächst noch glatten bzw. unstrukturierten) Oberfläche des Zahngetriebeelementes erzeugt werden, von der ausgehend anschließend das Profil der angrenzenden Zähne mit dem erfindungsgemäßen Verfahren erzeugt wird.

Das eigentliche Zahnprofil wird jedoch bei einer festen Position der Fräserachse relativ zur Längserstreckung des Zahnrückens hergestellt, wobei dieser Fräsvorgang jedoch auch an zwei oder mehr entlang des Zahnrückens verschobenen Positionen der Fräserachse unter Verschwenken der Fräserachse und Erzeugen der Zahnlücke bzw. Eintauchen in die Zahnlücke wiederholt werden kann, wenn eine entsprechend große Zahnbreite im Verhältnis zum Flugkreis der Schneideinsätze des Fräsers dies erfordert.

Das Verschwenken der Fräserachse erfolgt dabei zum Beispiel um einen Punkt außerhalb des Fräsers in Verlängerung der Fräserachse, wobei diese Verschwenkbewegung gleichzeitig auch von einer translatorischen Bewegung des jeweiligen Zahnes relativ zum Fräser überlagert sein kann.

In der bevorzugten Ausgestaltung des Verfahrens wird jedoch das Zahngetriebeelement um eine Achse gedreht, die parallel zum Zahnrücken verläuft, während der Fräser die Orientierung seiner Achse im Raum beibehält, gleichzeitig jedoch parallel und senkrecht zu seiner Achse (und auch senkrecht zur Längserstreckung des Zahnrückens) translatorisch verschoben wird, um der Bewegung des Zahngetriebeelementes zu folgen und dabei das Zahnprofil zu fräsen. Insbesondere ist bei Zahnrädern mit Geradverzahnung die Schwenkachse die Radachse des Zahnrades. Bei schrägverzahnten Zahnrädern weicht die Rotationsachse des Zahnrades jedoch von der Richtung des Zahnrückens ab, wobei die Drehung des Zahnrades dennoch um sein Rotationsachse erfolgt, die Fräserachse jedoch in einer zum Zahnrücken senkrechten Ebene translatorisch bewegt wird.

Wie bereits erwähnt, kann dieser Fräsvorgang an dem Profil eines Zahnes an verschiedenen Positionen über die Breite des Zahnes hinweg wiederholt werden, insbesondere wenn es sich um relativ breite Zähne handelt, wobei die Relation jeweils zum Radius bzw. Durchmesser des Fräsers herzustellen ist. Beispielsweise können Zähne bis zu einer Breite, die maximal 30% des Fräserradius beträgt, in vielen praktischen Fällen ohne Weiteres in einem einzigen Durchgang mit dem erfindungsgemäßen Verfahren gefräst werden, wenn dann der von dem Fräser an den Endabschnitten des jeweiligen Zahnes nicht mehr erfasste Bereich ausreichend nahe am Zahnlückengrund liegt und dieser Bereich beim Abrollen der Zähne auf gegenüberliegenden Zahngetriebeelementen nicht in Eingriff kommt.

Ist die Zahnbreite deutlich größer als 30% des Fräserradius, so müssen die entsprechenden Fräsvorgänge jeweils im Abstand von beispielsweise 30% oder weniger des Fräserradius entlang der Zahnbreite wiederholt werden. (Die Zahnbreite wird jeweils parallel zum Zahnrücken gemessen.)

Zweckmäßigerweise ist der entsprechende Fräser so ausgebildet, dass die Schneideinsätze radial von dem Außenumfang des Fräserkörpers ausreichend weit, zum Beispiel um mindestens die Zahnfußhöhe, hervorstehen und auf ihren beiden, gegenüberliegenden Seiten parallele, zur Fräserachse senkrechte Schneidkanten aufweisen, so dass die gegenüberliegenden Schneidkanten jeweils nacheinander zur Erzeugung der an einer Zahnlücke gegenüberliegenden Flanken benachbarter Zähne verwendet werden können. Die Fräserachse wird dementsprechend bei der Verwendung der Schneidkanten, die von der vorderen Stirnseite des Fräsers abgewandt sind, noch weiter verschwenkt als bei der Herstellung eines Zahnprofils mit den gegenüberliegenden Scheidkanten, da auch die rückwärtigen (der Stirnseite abgewandten) Schneidkanten der Schneideinsätze jeweils senkrecht zu einer Normalen auf den gerade herzustellenden Profiloberflächenbereich ausgerichtet sein müssen. Es versteht sich, dass die Zahnfußhöhen in weiten Bereichen schwanken können, wobei der praktisch relevante Bereich zwischen 1 mm und 150 mm Zahnfußhöhe liegt. Alternativ kann man den radialen Überstand der Schneidkanten über den Außenumfang des Fräsers auch auf den Fräserradius beziehen, da die Größe bzw. der Radius oder Durchmesser des verwendeten Fräsers im Allgemeinen an einen gewissen Bereich von Zahradgrößen und entsprechenden Zahnfußhöhen angepasst ist. So ausgedrückt sollte der erwähnte radiale Überstand der Schneidkanten zwischen 2 % und 20 % des Fräserradius liegen, vorzugsweise zwischen 5 % und 16% und im Allgemeinen mehr als 8%.

Zweckmäßigerweise haben die Schneideinsätze an ihren freien Enden auch eine Endschneidkante, die in einer Zylinderfläche um die Fräserachse liegt und demzufolge zur Fräserachse parallele Komponenten aufweist, wobei diese zusätzliche Endschneidkante zur Erzeugung des Zahnlückengrundes verwendet wird, indem der Fräser radial und senkrecht zu der durch zwei benachbarte Zahnrücken aufgespannten Ebene an das Getriebeelement herangeführt und ggf. auch parallel zur Richtung der Zahnrücken durch die Zahnlücke hindurch bewegt wird.

Der entsprechende Fräser zum Herstellen von Zahnprofilen, der einen drehbaren, rotationssymetrischen Grundkörper und Aussparungen in einer Peripherie des Grundkörpers hat, in welchem Schneideinsätze aufgenommen sind, löst die der Erfindung zugrundeliegende Aufgabe dadurch, dass die Schneideinsätze in einer radialen Ebene liegen und radial erstreckende Schneidkanten aufweisen, die sich darüber hinaus in radialer Richtung um mindestens die Zahnfußhöhe über die Umfangsfläche des die Aussparungen aufweisenden Abschnittes des Grundkörpers hinaus erstrecken.

Die mögliche Zahnfußhöhe und der auf den Fräserradius bezogenen radiale Überstand wurden oben bereits genauer definiert.

Ein solches Überstandsmaß ist notwendig, da die in radialer Richtung überstehenden Enden der Schneideinsätze in die Zahnlücken eingetaucht werden müssen und zusätzlich die Fräserachse auf der Seite des Fräsergrundkörpers an das Zahngetriebeelement heran gekippt werden soll, ohne dass der Fräsergrundkörper einen der benachbarten Zähne berührt, was das weitere Eintauchen der Zähne die Zahnlücke oder das notwendige Verkippen der Fräserachse verhindern würde.

Die zugehörigen Schneideinsätze haben in der bevorzugten Ausführungsform in der Draufsicht auf die Spanflächen eine schmale rechteckige Form, wobei die Schmalseite maximal der Breite der Zahnlücke am Grund des Zahngetriebeelementes entspricht und wobei die Längsseiten des der rechteckigen Spanfläche zwei parallele Schneidkanten aufweisen, wobei die Schneideinsätze ausreichend lang sind, so dass sie in ihrem an einem Fräsergrundkörper montierten Zustand jeweils um mindestens die Zahnfußhöhe mm über die Peripherie des Fräser hinausragen.

Vorzugsweise beträgt der Überstand das 1,1-Fache der Zahnfußhöhe und ist somit auf die Höhe der damit herzustellenden Zähne abgestimmt. Im Falle größerer Zahnfußhöhen beträgt der Überstand über den Fräsergrundkörper jeweils mindestens 10 % vorzugsweise mindestens 15% mehr als die Zahnfußhöhe.

Weitere Vorteile, Merkmale und Anwendungsmöglichkeiten der vorliegenden Erfindung werden deutliche anhand der folgenden Beschreibung einer bevorzugten Ausführungsform und der dazugehörigen Figuren. Es zeigen:
- Figur 1A, B, C: einen erfindungsgemäßen Fräser in drei verschiedenen Ansichten, wobei in Figur 1B und C auch montierte Schneideinsätze erkennbar sind,
- Figur 2 A, B Eine: Draufsicht und eine Seitenansicht eines erfindungsgemäßen Schneideinsatzes.
- Figuren 3 bis 5: schematisch den Herstellungsvorgang eines Zahnprofils durch Verschwenken der Fräserachse und gleichzeitige radiale Bewegung bezüglich der Zahnradachse gemäß einem ersten Verfahren.
- Figuren 6 und 7: das bevorzugte Schema zur Herstellung von Zahnrädern durch Rotation des Zahnrades um sein Achse bei gleichzeitiger translatorischer Bewegung des Fräser axial und radial ohne Verkippung der Fräserachse in der Werkzeugmaschine gemäß einem zweiten Verfahren.
- Figuren 8 und 9: schematisch ein gerade verzahntes Kegelrad in einer perspektivischen Ansicht gemäß Figur 8 und in einer Schnittansicht gemäß Figur 9 und
- Figur 10 a - c: verschiedene Ansichten eines alternativen Fräswerkzeugs gemäß der Erfindung.

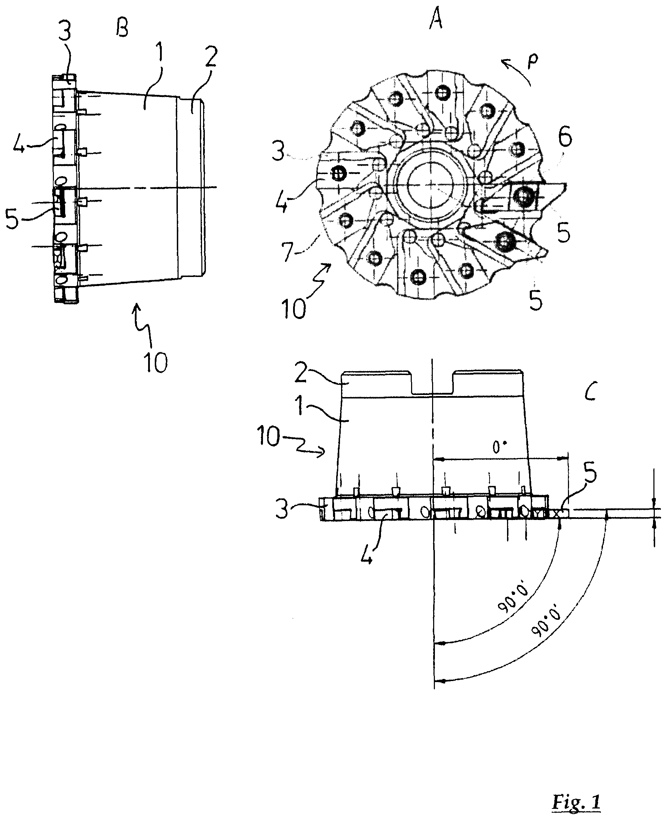

Man erkennt in Figur 1A einen Fräsergrundkörper 10 in einer stirnseitigen Draufsicht und in den Figuren 1 B und C in zwei um 90 ° gegeneinander verdrehten Seitenansichten. Der insgesamt mit 10 bezeichnete Fräsergrundkörper besteht aus einem kegelstumpfförmigen Hauptteil (1), einem rückwärtigen zylindrischen Befestigungsansatz 2 und einer vorderen, zylindrischen Erweiterung 3 an deren Stirnseite in der Peripherie Aufnahmetaschen 4 für - in diesem Fall - insgesamt zwölf - Schneideinsätze 5 ausgebildet sind. Die Zahl der Schneideinsätze kann in weiten Bereichen, zum Beispiel zwischen 4 und 40, variieren

In der Draufsicht der Figur 1A erkennt man in zwei der Aufnahmetaschen 4 eingesetzte, in der seitlichen Draufsicht auf die Freifläche parallelogrammförmige Schneideinsätze 5, die jeweils mindestens eine, in diesem Fall zentrale, Befestigungsbohrung 22 aufweisen und über Schrauben 6, die in entsprechende in den Sitzflächen vorgesehene Bohrungen 7 eingreifen, befestigt sind. Ein Pfeil P gibt die vorgesehene Rotationsrichtung des Fräsers im Betrieb an. Die Schneideinsätze sind als Wendeschneieinsätze mit jeweils zwei Paaren paralleler Profilschneidkanten 8 und einer Endschneidkante 9 ausgebildet.

Auch wenn in Figur 1 nur für Fachleute erkennbar, so weist jedenfalls das radial innere Ende des Aufnahmesitzes jeweils einen Freistich auf, innerhalb dessen die jeweils inaktiven, innerliegenden Schneidkanten 8, 9 des Schneideinsatzes 5 freiliegen und so vor Verschleiß geschützt sind, während die aktiven Enden der Schneideinsätze jeweils um mindestens die Zahnfußhöhe, zum Beispiel 6 mm bei einer Zahnfußhöhe von 5 mm, über die Peripherie der zylindrischen Erweiterung 3 hinausragen.

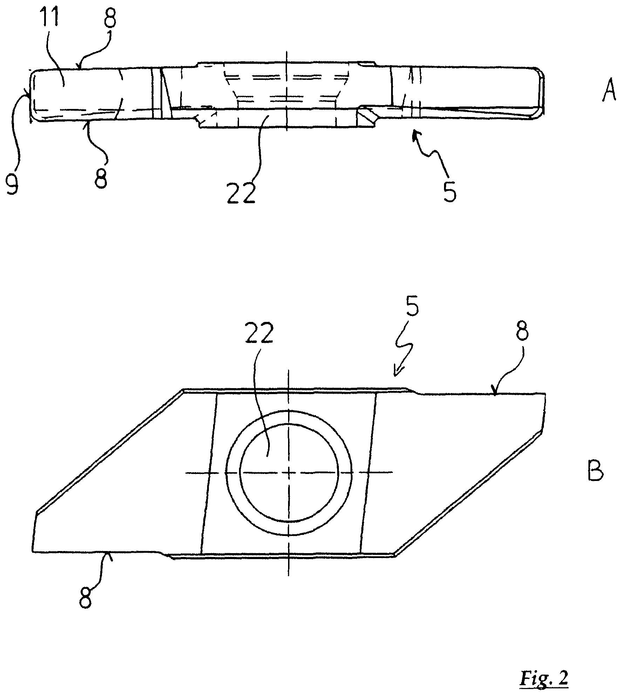

Wie auch in Figur 2 dargestellt ist, weist jeder Schneideinsatz 5 parallele, entlang einer Spanfläche 11 gegenüberliegende Schneidkanten 8 zur Herstellung der Zahnprofilflächen 12a,b; 13a,b sowie eine Endschneidkante 9 auf, die sich parallel zur Fräserachse 20 erstreckt, mit welcher der Zahnlückengrund 16 gefräst wird, wobei am diametral gegenüberliegenden Ende des parallelogrammförmigen Schneideinsatzes 5 identische Schneidkanten 8, 9 und eine Spanfläche 11 vorgesehen sind. In der Draufsicht auf die Spanfläche 11 haben die Schneideinsätze ein schmales, rechtwinkliges Schneidkantenprofil.

In Figur 1 A und C erkennt man deutlich, wie die Scheideinsätze 5 mit ihren freien Enden über den Rand der zylindrischen Erweiterung 3 des Fräsergrundkörpers 10 hervorstehen. Die Schneidkanten 8, 9 erstrecken sich dabei jeweils in einer Ebene senkrecht zur Fräserachse und ihre gedachten Verlängerungen verlaufen annährend durch die Fräserachse hindurch, während die Nebenschneidkanten bzw. Endschneidkanten 9 sich parallel zur Fräserachse erstrecken. Diese Nebenschneidkanten 9 sind zur Herstellung des Grundes einer Zahnlücke vorgesehen.

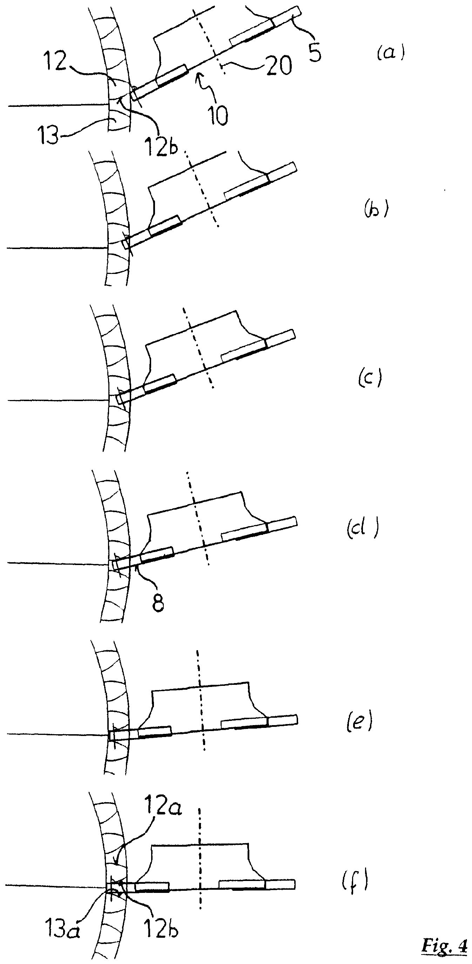

Die Figuren 4 bis 7 veranschaulichen zwei alternative Verfahren der Herstellung der Zahnprofile bzw. Zahnlücken zwischen benachbarten Zähnen, beispielsweise eines Zahnrades, wobei dies analog für Zahnstangen und Zahnradsegmente gelten würde. Dabei zeigt Figur 4 den radialen Einstich in einen Umgangsabschnitt eines massiven Rades unter Herstellung einer Zahnlücke 16 und eines Zahnlückengrundes 16a

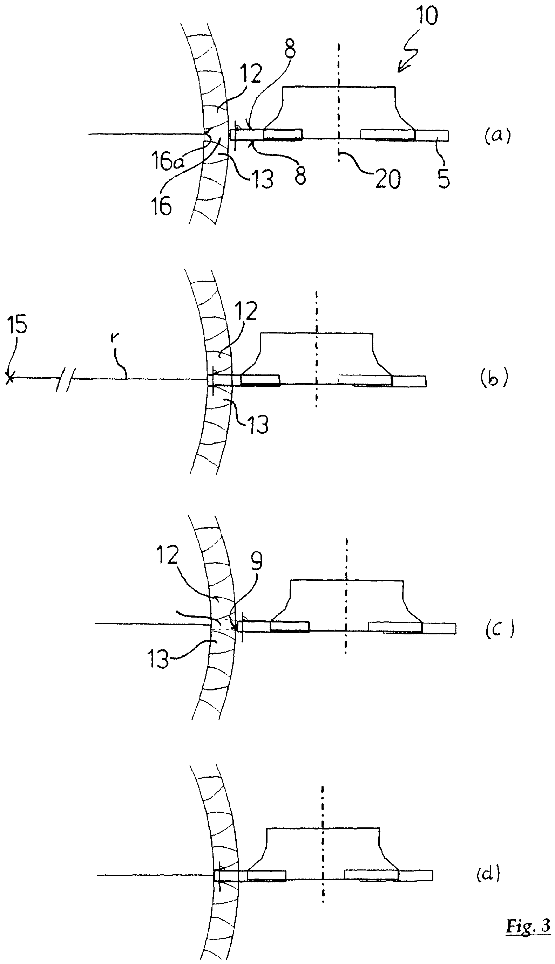

Das Zahnprofil wird hergestellt durch Verkippen der Fräserachse bei gleichzeitiger radialer Zustellung, wie es im Folgenden beschrieben wird. In den Figuren 3 bis 7 wird im Wesentlichen immer der gleiche Ausschnitt eines herzustellenden Zahnradabschnittes dargestellt und auch der Fräser 10 ist immer der gleiche, wobei auch durchgehend die gleichen Bezugszahlen für gleiche Teile verwendet werden, andererseits aber der besseren Übersichtlichkeit wegen nicht in allen Teilfiguren alle Bezugszahlen wiedergegeben werden, sondern vielmehr auf die einzelnen Teilfiguren verteilt sind.

In einem ersten Verfahrensabschnitt, der in Figur 3 dargestellt ist, fährt der Fräser 10 gemäß Figur 3(a) vor die Oberfläche des ursprünglich zylindrischen Zahnradrohlings in den Bereich einer Zahnlücke 16, wobei die Schneidkanten 8 parallel zu einer auf das Zahnrad bezogen radialen Richtung ausgerichtet sind, In Schritt 3(b) fährt der rotierende Fräser 10 mit seinen Schneideinsätzen 5 radial bis in eine Tiefe, die der sogenannten Zahnfußhöhe entspricht, und erzeugt so einen Teil der Zahnlücke 16 und des Zahnlückengrundes 16a. Dieser Vorgang wird in den Schritten 3(c) und (d) in einem gewissen Abstand, der geringer als die Breite der Spanfläche (bzw. die Länge der Nebenschneidkante 9) ist, wiederholt. Dabei entsteht eine Nut mit im Wesentlichen parallelen Seitenflanken und einer Tiefe, die etwa der Zahnhöhe entspricht, und die eine Breite hat, welche zwischen dem Einfachen und Zweifachen der Schneideinsatzdicke bzw. der Spanfläche liegt. Wegen eines notwendigen Freiwinkels definiert die Breite der Spanfläche auch die maximale Dicke des Schneideinsatzes hinter den Schneiden 8a, b. Dann wird der Fräser radial von dem Zahnrad fortbewegt und in eine Position entlang des Zahnrückens gebracht, von der aus der Profilierungsvorgang beginnen soll.

Figur 4 zeigt in sechs einzelnen Schritten 4(a) bis 4(f), wie das untere Profil 12b des dem Zahn 13 benachbarten Zahnes 12 hergestellt wird. Während des Verkippens der Fräserachse 20 rotiert der Fräser gleichzeitig um diese Achse 20 und taucht gleichzeitig vom Außenumfang des Zahnrades her in die gemäß Figur 3 teilweise hergestellte Zahnlücke 16 ein, so dass auf diese Weise das untere Profil 12b des Zahnes 12 hergestellt wird. Gleichzeitig wird auch der obere Teil der Zahnlücke 16 vervollständigt.

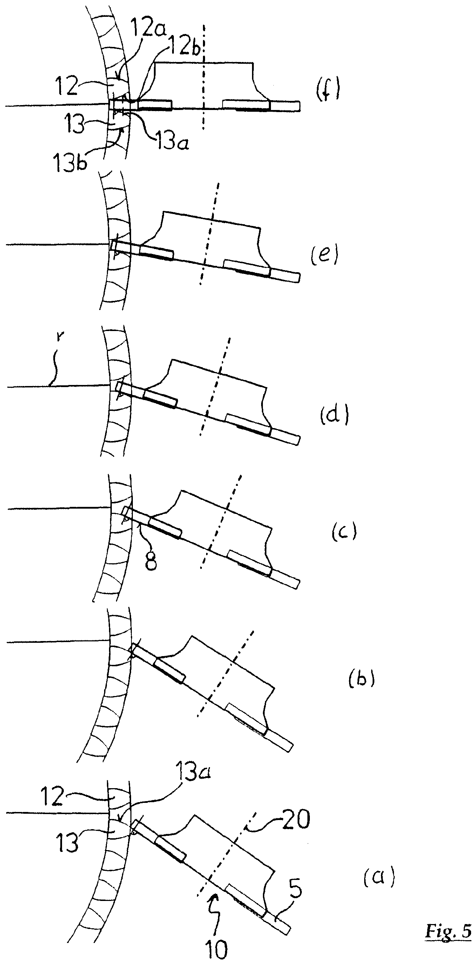

Nach Fertigstellung des Profils 12b des Zahnes 12 wird der Fräser 10 aus der Zahnlücke 10 herausgezogen und der Fräser 10 in eine Ausgangsstellung zurückverschwenkt, in welcher die Fräserachse bzgl. der neutralen Position während der Herstellung des Zahnlückengrundes in etwa um demselben Winkel nach rechts verschwenkt ist (siehe Figur 5(a)), wie sie in der Ausgangsposition 4(a) bei der Herstellung des Profils 12b nach links verschwenkt war. Durch Zurückschwenken der Fräserachse 20 in die vertikale Ausrichtung unter gleichzeitigem Eintauchen in die (und Vervollständigung der) Zahnlücke 16 wird gemäß den Schritten 5(a) bis 5(f) mit der Zahnlücke 16 auch das Profil 13a hergestellt.

Dabei stehen die Schneidkanten 8 jeweils senkrecht auf einer Normalen des gerade hergestellten Abschnittes des Zahnprofils, wie dies durch eine Linie im Kontaktpunkt zwischen Zahnprofil und Schneidkante 8 jeweils dargestellt ist (siehe auch Figur 4(d) und 5(c)). Durch die kontinuierliche Schwenkbewegung der Fräserachse bei gleichzeitigem Eintauchen in die Zahnlücke 16 wird das Zahnprofil 12b/ 13a völlig facettenfrei und gleichmäßig hergestellt.

Damit beide parallelen Schneidkanten 8 eines jeweiligen Schneideinsatzes in der vorstehend beschriebenen Weise zur Herstellung der Profile 12b, 13a verwendet werden können, müssen die Schneideinsätze genügend weit über die Peripherie des Fräsergrundkörpers hinausragen, damit nicht der Fräsergrundkörper beim Herstellen der Profile 12b bzw. 13a gegen die in der Darstellung gemäß Figur 3 bis 5 weiter oben liegenden Zähne des Zahnrades anschlägt. Bei der Herstellung von Verzahnungen an Zahnstangen kommt es auf die Länge der Zahnstange an, ob das Verfahren in dieser Weise auf alle Zähne angewendet werden kann oder ob für die im Zentrum liegenden Zähne jeweils nur die stirnseitig gelegene Schneidkante 8 verwendet werden kann.

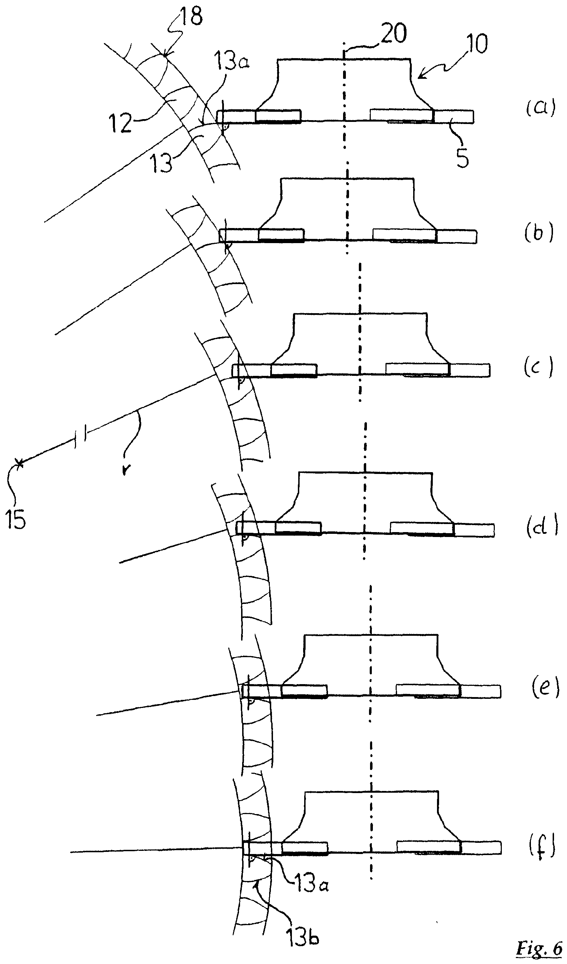

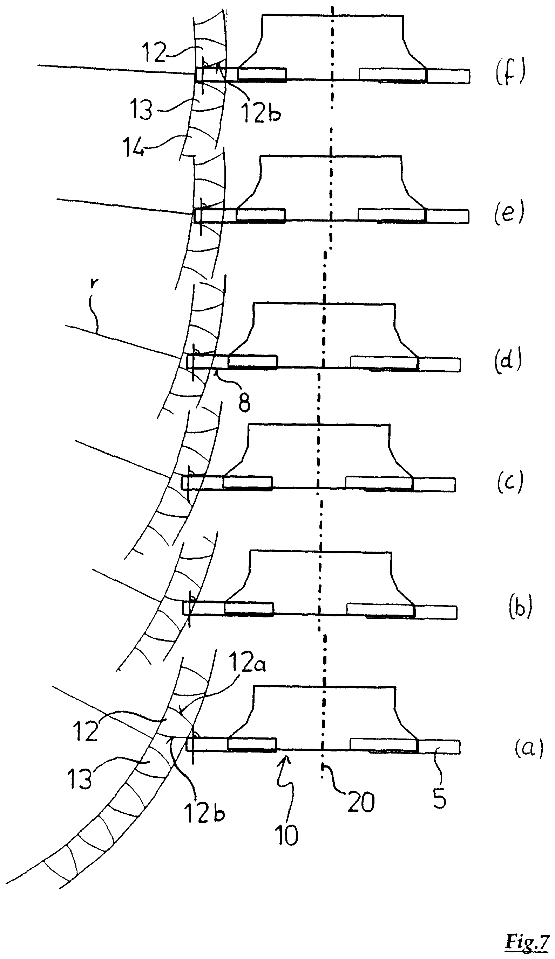

Das bevorzugte Schema einer Herstellung der Zahnprofile von Zahngetriebeelementen zeigen die Figuren 6 und 7 am Beispiel eines Zahnrades 20, wobei dieses Schema analog mindestens auch auf Abschnitte von Zahnstangen anwendbar ist, indem der jeweilige Zahnstangenabschnitt um eine imaginäre Achse auf der Rückseite des Zahnprofils gedreht wird, die einer gedachten Zahnradachse entspricht, wobei die imaginäre Achse bei der Herstellung der Zähne mit diesen entlang der Zahnstange mitwandert.

Von einem Zahnrad 18 sind beispielhaft zwei benachbarte Zähne 12, 13 mit einer dazwischen liegenden Zahnlücke 16 dargestellt, deren (in den Figur 6 und 7) jeweils oberes Profil mit 12a bzw. 13a bezeichnet ist, während das jeweils untere Profil der Zähne 12, 13 mit 12b bzw. 13b bezeichnet wird. Zunächst wird auch bei diesem Verfahren eine erster Teil der Zahnlücke 16 gemäß den Schritten 3(a) bis 3(d) hergestellt.

In Schritt 6(a) ist das Zahnrad um seine Achse etwas nach oben gedreht und der Fräser wird mit dem Flugkreis der Schneideinsätze radial im äußeren Bereich des Zahnes 13 zugestellt, um zunächst mit dem Fräsen des radial äußeren Teils des Profils 13a zu beginnen, dabei wird das Zahnrad wieder abwärts gedreht, während der Fräser abwärts und gleichzeitig horizontal nach rechts (Im Ergebnis jedoch mit einer Komponente radial einwärts in Richtung der Zahnradachse 15) bewegt wird, um in den kontinuierlich ineinander übergehenden Schritten 6(b), bis 6(f) die radial inneren Abschnitte des Profils 13a zu fräsen, während die Fräserachse Ihre Orientierung (vertikale Ausrichtung) im Raum beibehält. Durch die kontinuierliche Drehung und gleichzeitige kontinuierliche Abwärts- und Einwärtsbewegung des Fräsers in Bezug auf das sich drehende Zahnrad entsteht ein glattes Profil ohne Facetten. Die Drehung des Zahnrades und die entsprechende Nachführung des Fräsers geschieht solange, bis das Profil in Schritt 6(f) bis zu der gewünschten Tiefe der Zahnlücke 16 gefräst ist, gegebenenfalls unter Herstellung von Protuberanzen, die eventuell auch die Form eines leichten Hinterschnitts haben können, indem die Drehung über die in 6(f) dargestellte Position hinaus erfolgt, während die radial äußeren Abschnitte der Schneideinsätze 5 mit dem Zahn 13 in Eingriff bleiben.

Dann folgt nach dem Herausfahren des Fräsers aus der Zahnlücke eine Abwärtsdrehung des Zahnrades um seine Achse 15 unter Zustellung des Fräsers, nunmehr mit den oberen, der Stirnseite des Fräsers abgewandten Schneidkanten 8 an den radial äußeren Teil des Zahnes 12 zur Herstellung des Profils 12b, das dann unter Aufwärtsdrehung und entsprechender axialer und radialer Nachführung des Fräsers in den kontinuierlich ineinander übergehenden Schritten 7(a) bis 7(f) in analoger Weise hergestellt wird das Profil 13a.

Das Verfahren wird dann durch Erzeugen der nächsten Nut entsprechend den Schritten 3(a) bis 3(d) zwischen dem Zahn 13 und dem nächstfolgenden Zahn 14 fortgesetzt, wo die Profile 14a und 13b in identischer Weise hergestellt werden und so fort, bis zum Schluss nur noch das Profil 12a hergestellt werden muss, um das Zahnrad zu vollenden.

Wenn der Zahn im Verhältnis zum Flugkreisdurchmesser des Fräsers eine zu große Breite (= Länge des Zahnrückens) hat, um mit einem Fräsvorgang hergestellt werden, wird der oben beschriebene Vorgang an einer oder mehreren verschieden Positionen bezüglich der Längserstreckung des Zahnrückens wiederholt.

Das erfindungsgemäße Verfahren ermöglicht es, sehr unterschiedliche Zahnprofile mit ein und demselben Fräser herzustellen, wobei zur Erzeugung eines gewünschten Profils lediglich die Schwenkbewegung oder translatorische Bewegung der Fräserachse und die gleichzeitige Drehung und/oder translatorische Bewegung des Zahnrades und/oder des Fräsergrundkörpers aufeinander abgestimmt werden müssen, was aber mit modernen, mehrachsigen Werkzeugmaschine und einer entsprechenden Programmierung zu den Routineaufgaben eines Fachmanns gehört.

Damit entfällt das Erfordernis, für unterschiedliche Zahnprofile unterschiedliche Fräser und/oder Schneideinsätze zu verwenden, was die Herstellung von Zahngetriebeelementen erheblich rationalisiert und vereinfacht.

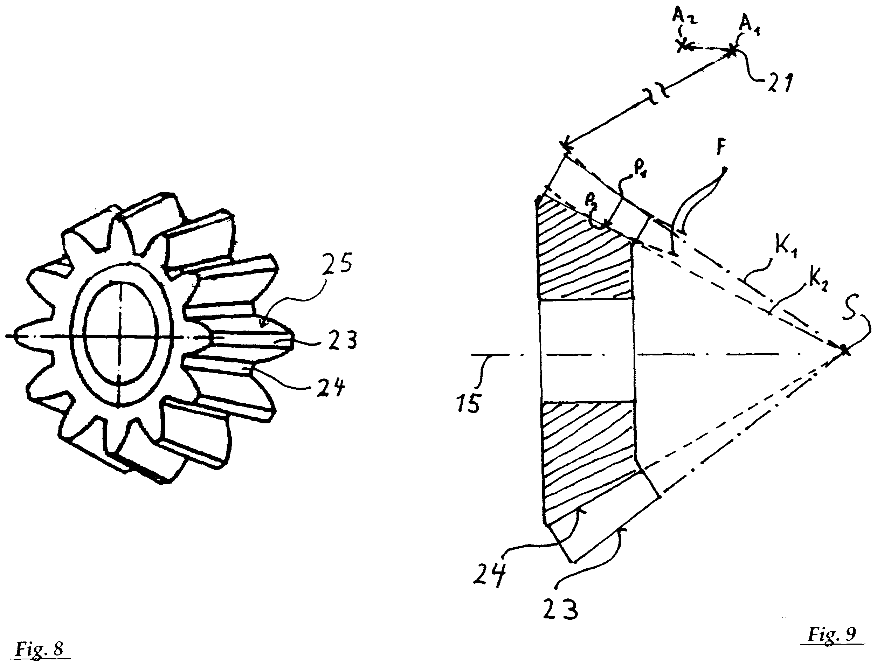

In den Figuren 8 und 9 ist schematisch ein gerade verzahntes des Kegelrad in einer perspektivischen Ansicht gemäß Figur 8 und in einer Schnittansicht gemäß Figur 9. dargestellt. Wie man insbesondere aus Figur 9 erkennt, hat das Kegelrad eine konische Hüllfläche K₁, auf welcher alle Zahnrücken 23 gemeinsam liegen und auch die Zahngrundflächen 24 liegen allesamt auf einer gemeinsamen konischen Fläche K₂, die einen kleineren Konuswinkel aufweist, sodass die gedachten Konusflächen K₁ und K₂ eine gemeinsame Spitze S aufweisen, die auf der Achse 15 des Kegelrades liegt. Jeder der Zähne 25 hat, wie man ebenfalls in Figur 9 erkennt, eine Zahnhöhe, die von dem radial äußeren Bereich beziehungsweise von der konischen Spitze S weiter entfernten Bereich bis zum radial Inneren beziehungsweise der Konusspitze S näher gelegenen Bereich abnimmt. Insgesamt verjüngt sich das Profil der Zähne 25, ausgehend von dem der Spitze S fern gelegenen Bereich bis zu der Konusspitze S nahe gelegenen Bereich im selben Verhältnis wie die Querschnitte der entsprechenden Konusflächen an den selben Positionen.

In Figur 9 ist außerdem noch schematisch mit zwei gestrichelten Linien F der Flugkreis der Schneidzähne eines Fräsers angedeutet, der das Zahnprofil fräst. Dargestellt ist der Flugkreis an den beiden Extrempunkten des Zahnes, nämlich am Zahnrücken 23, wo der in Bezug auf das Zahnprofil tiefstgelegene Punkt des Flugkreises mit P1 bezeichnet ist, und nochmals am Zahngrund, wo der bezüglich des Zahnprofils tiefstgelegene Punkt des Flugkreises mit P₂ bezeichnet ist. Dieser tiefstgelegene Punkt des Flugkreises bewegt sich während des Fräsvorgangs entlang des Pfeiles von P₁ nach P₂.

Dabei wird gleichzeitig das Kegelrad um seine Achse 15 gedreht, während außerdem die Achse 21 des Fräsers, in die in der hier gewählten Darstellung senkrecht zur Papierebene verläuft, von dem Punkt A₁ zu dem Punkt A₂ verschoben wird. Es versteht sich, das diese Verschiebung hier nur schematisch angedeutet ist und sich die genaue Lage der Punkte A₁ und A₂ auf Basis des Fräseradius und der jeweils tiefstgelegenen Punkte des Flugkreisprofils P₁ beziehungsweise P₂ bestimmen lässt.

Es versteht sich, dass das Zahnprofil ansonsten exakt in der selben Art und Weise hergestellt wird, wie dies bereits im Zusammenhang mit den Figuren 6 und 7 dargestellt wurde, wobei alternativ auch eine Verschwenkung der Fräserachse im Raum analog der Darstellung in den Figuren 3 bis 5 vorgenommen werden könnte. Lediglich die Positionierung der Achse 21 bezüglich des jeweiligen Zahnradrohlinges unterscheidet sich bei einem Kegelrad von der Positionierung bei einem zylinderischen Zahnrad, während die eigentlichen Fräsvorgänge und Bewegungen von Zahnrad und Fräser beziehungsweise Fräserachse im wesentlich analog verlaufen.

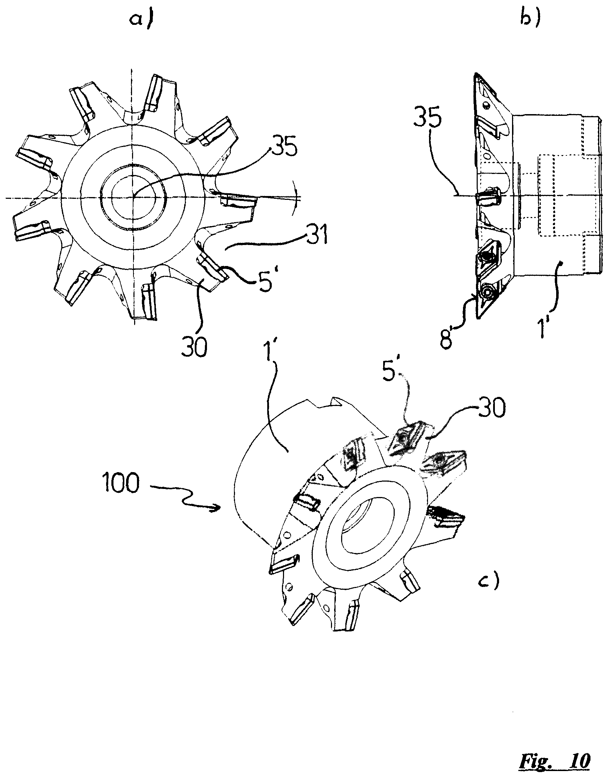

Figur 10 zeigt verschiedene Ansichten eines alternativen Fräsers 100. Auch hier weist der Fräser 100 einen Grundkörper 1' auf, der in diesem Fall zylindrisch ausgebildet ist, wobei der wesentliche Unterschied gegenüber dem in Figur 1 dargestellten Fräser weniger in dem Grundkörper 1' besteht, sondern vielmehr darin, dass die Schneideinsätze nicht tangential, sondern radial montiert sind. Auch in diesem Fall weisen die Schneideinsätze 5' jedoch zumindest eine Schneidkante 8' auf, welche sich senkrecht zu der Achse 35 des Fräsers erstreckt. Auch hier ragen die Schneideinsätze 5' bzw. deren Schneidkanten 8' über die Peripherie des Fräsergrundkörpers 1' hinaus, und zwar mindestens um ein Maß, welches der Höhe der Zähne zwischen Zahngrund und Zahnlücke entspricht. Aufgrund der radialen Montage der Schneideinsätze sind hier jedoch zusätzlich Stützfinger 30 vorgesehen, welche sich ebenfalls radial über den Fräsergrundkörper 1' hinaus erstrecken und die Rückseite der Schneideinsätze 5' abstützen. Die einzelnen Stützfinger 30' sind durch Spanräume 31 getrennt und weisen an ihrer Vorderseite jeweils eine Aufnahmetasche zur Aufnahme eines Schneideinsatzes 5' auf. Dabei ist das Profil des Stützfingers 30 jedoch schmaler als das Profil des jeweiligen Schneideinsatzes 5', wie man insbesondere im unteren und oberen Bereich der Seitenansicht gemäß Figur 10b sieht. Die einzelnen Stützfinger 30, die an der Vorderseite der Stützfinger in entsprechenden Aufnahmetaschen montierten Schneideinsätze 5' und die Spanräume zwischen den Stützfingern und vor den Schneideinsätzen 5' sind in der stirnseitigen Ansicht gemäß Figur 10a am besten zu erkennen. Figur 10c zeigt den Fräser 100 in einer perspektivischen Ansicht.

Bei diesem Fräser wird jeweils nur die stirnseitige Schneidkante 8' der Schneideinsätze 5' benutzt, die sich senkrecht zur Achse 35 erstreckt. Gegebenenfalls kann auch die Spitze der rhombischen Schneideinsätze eine eventuell auch asymmetrisch, d.h. senkrecht zu der beschriebenen Schneidkante 8', verlaufende Abschrägung oder Abflachung aufweisen, um auf diese Weise den Zahngrund zwischen benachbarten Zähnen einfacher herstellen zu können. Es versteht sich, dass die Zahnlücken der mit einem solchen Fräser herzustellenden Verzahnungen ausreichend bereit sein müssen, um die rhombischen Schneideinsätze 5' einschließlich der Stützfinger 30 aufnehmen zu können, wenn eine Seite eines Zahnprofils durch die sich senkrecht zur Achse 35 erstreckenden Schneidkanten 8' überarbeitet wird.

Für Zwecke der ursprünglichen Offenbarung wird darauf hingewiesen, dass sämtliche Merkmale, wie sie sich aus der vorliegenden Beschreibung, den Zeichnungen und den abhängigen Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen und die Betonung der Unabhängigkeit der einzelnen Merkmale voneinander wird hier nur der Kürze und der Lesbarkeit der Beschreibung wegen verzichtet.

## Patentansprüche

1. Verfahren zum Fräsen einer Reihe von Zähnen (12, 13) eines Zahngetriebeelementes mit geradlinigem Zahnverlauf, mit einem Fräser (10), der um eine Fräserachse (21) drehbar ist und der an seiner Peripherie austauschbare Schneideinsätze (5) aufweist, die derart angeordnet sind, dass sie beim Heranführen des Fräsers (10) an das Zahngetriebeelement in die Lücken (16) zwischen benachbarten Zähne (12, 13) eingreifen bzw. diese Lücken erzeugen, **dadurch gekennzeichnet, dass** ein Fräser verwendet wird, bei welchem die Schneideinsätze in ihrem an dem Fräser montierten Zustand mindestens eine sich radial und senkrecht zur Fräserachse erstreckende Schneidkante (8a, b) aufweisen, wobei beim Fräsen des Zahnprofils die Fräserachse in einer Ebene senkrecht zur Längserstreckung des Zahnrückens ausgerichtet und während des Eintauchens der um die Fräserachse rotierenden Schneideinsätze (5) in die Oberfläche bzw. Zahnlücken eines Zahngetriebeelementes in dieser Ebene über einen Winkelbereich verschwenkt wird, der den Bereich aller Normalen zur Profiloberfläche (12a,b; 13a,b) des herzustellenden Zahnes (12, 13) abdeckt.

2. Verfahren nach Anspruch 1, **dadurch gekennzeichnet, dass** während des Eintauchens und Verschwenkens des rotierenden Fräsers und der Schneideinsätze das Zahngetriebeelement in Richtung der Reihe von Zähnen translatorisch verschoben oder um eine Achse des Zahngetriebeelementes gedreht wird, soweit das Zahngetriebeelement ein Zahnrad ist.

3. Verfahren nach einem der Ansprüche 1 oder 2, **dadurch gekennzeichnet, dass** die Schneideinsätze radial von dem Außenumfang des Fräsergrundkörpers hervorstehen und auf gegenüberliegenden Seiten parallele, zur Fräserachse senkrechte Schneidkanten (8a, b) aufweisen, wobei die gegenüberliegenden Schneidkanten jeweils nacheinander zur Erzeugung der an einer Zahnlücke gegenüberliegenden Flanken benachbarter Zähne (12, 13) verwendet werden.

4. Verfahren nach Anspruch 3, **dadurch gekennzeichnet, dass** die Schneideinsätze zusätzlich eine Schneidkante (9) aufweisen, die in einer Zylinderfläche um die Fräserachse liegt und zur Fräserachse (21) parallele Komponenten aufweist, wobei diese zusätzliche Schneidkante zur Erzeugung des Zahnlückengrundes verwendet wird, indem der Fräser radial und senkrecht zu der durch zwei benachbarte Zahnrücken aufgespannten Ebene an das Getriebeelement herangeführt wird, wobei die Fräserachse jeweils senkrecht zu einem aktuell erzeugten Flächensegment des Zahnprofils steht

5. Verfahren nach Anspruch 1 bis 4, **dadurch gekennzeichnet, dass** das eine Zahnlücke begrenzende Zahnprofil mit folgenden Schritten hergestellt wird:
a) Herstellung einer Nut in der zylindrischen Oberfläche eines Zahnradrohlinges (20), indem der Fräser mit dem Flugkreis der Schneideinsätze in einer der Zahnhöhe entsprechenden Tiefe parallel zu Achse (15) des Zahnrades (20) die Oberfläche auftrennt.
b) Herausziehen des Fräsers aus der Nut und Zustellen in einer axialen Position des Zahnrückens entlang welcher das Profil herzustellen ist an der Spitze eines die Nut bzw. eine entsprechende Zahnlücke begrenzenden Zahns, wobei das Zahnrad in eine Position gedreht und der Fräser entsprechend nachgeführt wird, so dass die Schneidkanten (8) des Fräsers senkrecht zu einer Normalen auf den radial äußeren Endabschnitt des Profils steht.
c) Drehen des Zahnrades und gleichzeitiges Nachführen des Fräsers durch axiale und radiale Translation, wobei die Fräserachse ihre Orientierung im Raum beibehält und das Profil des Zahnes kontinuierlich entsteht.

6. Verfahren nach einem der Ansprüche 1 bis 5, **dadurch gekennzeichnet, dass** der Vorgang des Eintauchens und Verschwenkens in mindestens einer weiteren, zu der ersten Ebene parallelen Ebene wiederholt wird.

7. Verfahren nach einem der Ansprüche 1 bis 4, **dadurch gekennzeichnet, dass** der Zahnrücken sich auf einer konischen Fläche erstreckt, die gegenüber der Achse der konischen Fläche geneigt ist.

8. Verfahren nach Anspruch 7, dass der zur Konusachse gemessene Winkel der konischen Fläche zwischen 0 und 90 ° vorzugsweise zwischen 10° und 80° beträgt.

9. Verfahren nach Anspruch 7 oder 8, mit den folgenden Schritten :
a) Herstellen einer Nut in der konischen Oberfläche eines Zahnradrohlinges (20), indem der Fräser mit dem Flugkreis der Schneideinsätze in einer der Zahnhöhe entsprechenden Tiefe unter einem Neigungswinkel zu der Konusachse die Oberfläche auftrennt, welcher dem Konuswinkel des Zahngrundes eines herzustellenden Kegelrades entspricht.
b) Herausziehen des Fräsers aus der Nut und Zustellen des Fräserflugkreises in einer axialen Position des Zahnrückens, an welcher das Profil herzustellen ist, an der Spitze eines die Nut bzw. eine entsprechende Zahnlücke begrenzenden Zahns, wobei das Zahnrad um die Konusachse gedreht und der Fräser entsprechend nachgeführt wird, so dass die Schneidkanten (8) des Fräsers senkrecht zu einer Normalen auf dem radial äußeren Endabschnitt des Profils stehen.
c) Drehen des Zahnrades und gleichzeitiges Nachführen des Fräsers durch, bezogen auf die Fräserachse, axiale und radiale Translation, wobei die Fräserachse ihre Orientierung im Raum beibehält und das Profil des Zahnes kontinuierlich entsteht.

10. Verfahren nach Anspruch 9, **dadurch gekennzeichnet dass** die auf die Fräserachse bezogene axiale und radiale Translation des Fräsers einer Kreisbewegung um eine auf der Konusachse liegende Konusspitze der Konusflächen des herzustellenden Kegelrades entspricht, wobei die Fräserachse sich jeweils parallel zu einer Tangente an die Konusfläche erstreckt.

11. Fräser zum Herstellen von Zahnprofilen durch ein Verfahren nach einem der Ansprüche 1 bis 10, mit einem drehbaren, rotationssymmetrischen Grundkörper und Aussparungen an einer Peripherie des Grundkörpers, in welchen Schneideinsätze aufgenommen sind, wobei die Schneideinsätze in einer Radialebene liegende und sich radial erstreckende Schneidkanten aufweisen, die sich in radialer Richtung um mindestens 6 mm über die Umfangsfläche des die Aussparungen aufweisenden Abschnittes des Grundkörpers hinaus erstrecken, **dadurch gekennzeichnet, dass** der Fräser mit Schneideinsätzen nach einem der Ansprüche 12 oder 13 ausgerüstet ist.

12. Schneideinsatz für einen Fräser nach Anspruch 11 zur Verwendung in einem Verfahren nach einem der Ansprüche 1 bis 6, wobei der Schneideinsatz als tangentialer Wendeschneidsatz ausgebildet ist, der in der Draufsicht auf die Freifläche eine längliche Parallelogrammform mit einer die Breite um mindestens das Doppelte übersteigenden Länge und mit einer zentralen Befestigungsbohrung hat, wobei der Rand der Befestigungsbohrung von den Enden in Längsrichtung des Parallelogramms einen Abstand von mindestens 12 mm hat.

13. Schneideinsatz nach Anspruch 12 **dadurch gekennzeichnet, dass** der Schneideinsatz über mindestens 8 mm seiner an den Längsenden des Parallelogramms vorgesehen Schneidabschnitte eine tangentiale Spanfläche mit zwei parallelen Scheidkanten und daran angrenzende Freiflächen hat, die mit der Spanfläche einen Winkel von weniger als 90 Grad einschließen.

14. Verfahren zum Fräsen einer Reihe von Zähnen (12, 13) eines Zahngetriebeelementes mit geradlinigem Zahnverlauf, wobei das Zahngetriebeelement ein Kegelrad ist, mit einem Fräser (10), der um eine Fräserachse (21) drehbar ist und der an seiner Peripherie austauschbare Schneideinsätze (5) aufweist, die derart angeordnet sind, dass sie beim Heranführen des Fräsers (10) an das Zahngetriebeelement in die Lücken (16) zwischen benachbarten Zähne (12, 13) eingreifen bzw. diese Lücken erzeugen, **dadurch gekennzeichnet, dass** ein Fräser verwendet eine sich radial und senkrecht zur Fräserachse erstreckende Schneidkante (8a, b) aufweisen, wobei beim Fräsen des Zahnprofils die Fräserachse in einer Ebene senkrecht zu einem die gewünschte Profiloberfläche begrenzenden Rand eines Zahnrückens (2,13) ausgerichtet wird und während des Eintauchens der um die Fräserachse rotierenden Schneideinsätze (5) in die Oberfläche bzw. Zahnlücken eines Zahngetriebeelementes in dieser Ebene über einen Winkelbereich verschwenkt wird, der den Bereich aller Normalen zur Profiloberfläche (12a,b; 13a,b) des herzustellenden Zahnes (12, 13) abdeckt.

## Claims

1. A method of milling a row of teeth (12, 13) of a toothed gear element with a straight tooth configuration, with a milling cutter (10) which is rotatable about a milling cutter axis (21) and has at its periphery interchangeable cutting inserts (5) which are so arranged that when the milling cutter (10) is approached to the toothed gear element the cutting inserts engage into the gaps (16) between adjacent teeth (12, 13) or generate those gaps, **characterised in that** a milling cutter is used, in which the cutting inserts in their condition of being mounted to the milling cutter have at least one cutting edge (8a, b) extending radially and perpendicularly relative to the milling cutter axis, wherein upon milling of the tooth profile the milling cutter axis is oriented in a plane perpendicularly to the longitudinal extent of the tooth back and during the engagement movement of the cutting inserts (5) which rotate about the milling cutter axis into the surface or tooth gaps of a toothed gear element it is pivoted in said plane over an angular range which covers the range of all normals to the profile surface (12a, b; 13a, b) of the tooth (12, 13) to be produced.

2. A method according to claim 1 **characterised in that** during the engagement movement and the pivotal movement of the rotating milling cutter and the cutting inserts the toothed gear element is translatorally displaced in the direction of the row of teeth or is rotated about an axis of the toothed gear element insofar as the toothed gear element is a gear wheel.

3. A method according to one of claims 1 or 2 **characterised in that** the cutting inserts project radially from the outer periphery of the milling cutter main body and on mutually opposite sides have parallel cutting edges (8a, b) perpendicular to the milling cutter axis, wherein the mutually opposite cutting edges are respectively used successively for generating the flanks of adjacent teeth (12, 13), which flanks are in opposite relationship at a tooth gap.

4. A method according to claim 3 **characterised in that** the cutting inserts additionally have a cutting edge (9) which is disposed in a cylindrical surface around the milling cutter axis and has components parallel to the milling cutter axis (21), wherein said additional cutting edge is used to generate the tooth gap bottom, by the milling cutter being approached to the gear element radially and perpendicularly to the plane defined by two adjacent tooth backs, wherein the milling cutter axis is respectively disposed perpendicularly to a currently generated surface segment of the tooth profile.

5. A method according to claims 1 to 4 **characterised in that** the tooth profile delimiting a tooth gap is produced with the following steps:
a) producing a groove in the cylindrical surface of a gear wheel blank (20) by the milling cutter cutting the surface open with the cutting circle defined by the cutting inserts in a depth corresponding to the tooth height parallel to the axis (15) of the gear wheel (20),
b) pulling the milling cutter out of the groove and feeding it in an axial position of the tooth back along which the profile is to be produced at the tip of a tooth delimiting the groove or a corresponding tooth gap, wherein the gear wheel is rotated into a position and the milling cutter is correspondingly tracked therewith so that the cutting edges (8) of the milling cutter are perpendicular to a normal to the radially outward end portion of the profile, and
c) rotating the gear wheel and simultaneously tracking the milling cutter by axial and radial translation, wherein the milling cutter axis retains its orientation in space and the profile of the tooth is continuously produced.

6. A method according to one of claims 1 to 5 **characterised in that** the process of engagement movement and pivotal movement is repeated in at least one further plane parallel to the first plane.

7. A method according to one of claims 1 to 4 **characterised in that** the tooth back extends on a conical surface which is inclined relative to the axis of the conical surface.

8. A method according to claim 7 **characterised in that** the angle of the conical surface, that is measured relative to the cone axis, is between 0 and 90°, preferably between 10° and 80°.

9. A method according to claim 7 or claim 8 comprising the following steps:
a) producing a groove in the conical surface of a gear wheel blank (20) by the milling cutter cutting the surface open with the cutting circle defined by the cutting inserts in a depth corresponding to the tooth height at an angle of inclination to the cone axis, that corresponds to the cone angle of the tooth bottom of a bevel gear to be produced,
b) pulling the milling cutter out of the groove and feeding the milling cutter cutting circle in an axial position of the tooth back at which the profile is to be produced at the tip of a tooth delimiting the groove or a corresponding tooth gap, wherein the gear wheel is rotated about the cone axis and the milling cutter is correspondingly tracked therewith so that the cutting edges (8) of the milling cutter are perpendicular to a normal to the radially outward end portion of the profile, and
c) rotating the gear wheel and simultaneously tracking the milling cutter by axial and radial translation, with respect to the milling cutter axis, wherein the milling cutter axis retains its orientation in space and the profile of the tooth is continuously produced.

10. A method according to claim 9 **characterised in that** the axial and radial translation of the milling cutter, that is related to the milling cutter axis, corresponds to a circular movement about a cone tip, lying on the cone axis, of the cone surfaces of the bevel gear to be produced, wherein the milling cutter axis respectively extends parallel to a tangent to the cone surface.

11. A milling cutter for producing tooth profiles by a method according to one of claims 1 to 10 comprising a rotatable, rotationally symmetrical main body and recesses at a periphery of the main body, in which cutting inserts are received, wherein the cutting inserts have cutting edges which are disposed in a radial plane and which extend radially and which extend in the radial direction by at least 6 mm beyond the peripheral surface of the portion of the main body, that has the recesses, **characterised in that** the milling cutter is equipped with cutting inserts according to one of claims 12 or 13.

12. A cutting insert for a milling cutter according to claim 11 for use in a method according to one of claims 1 to 6 wherein the cutting insert is in the form of a tangential reversible cutting insert which in the plan view onto the relief surface is of an elongate parallelogram shape of a length exceeding the width by at least twice and having a central fixing bore, wherein the edge of the fixing bore is at a spacing of at least 12 mm from the ends in the longitudinal direction of the parallelogram.

13. A cutting insert according to claim 12 **characterised in that** the cutting insert over at least 8 mm of its cutting portions provided at the longitudinal ends of the parallelogram has a tangential rake surface with two parallel cutting edges and relief surfaces adjoining same, which include an angle of less than 90 degrees with the rake surface.

14. A method of milling a row of teeth (12, 13) of a toothed gear element with a straight tooth configuration, wherein the toothed gear element is a bevel gear, comprising a milling cutter (10) which is rotatable about a milling cutter axis (21) and has at its periphery interchangeable cutting inserts (5) which are so arranged that when the milling cutter (10) is approached to the toothed gear element the cutting inserts engage into the gaps (16) between adjacent teeth (12, 13) or generate those gaps, **characterised in that** a milling cutter is used, in which the cutting inserts in their condition of being mounted to the milling cutter have at least one cutting edge (8a, b) extending radially and perpendicularly relative to the milling cutter axis, wherein upon milling of the tooth profile the milling cutter axis is oriented in a plane perpendicularly to an edge of a tooth back (2, 13), that delimits the desired profile surface, and during the engagement movement of the cutting inserts (5) which rotate about the milling cutter axis into the surface or tooth gaps of a toothed gear element it is pivoted in said plane over an angular range which covers the range of all normals to the profile surface (12a, b; 13a, b) of the tooth (12, 13) to be produced.

## Revendications

1. Procédé de fraisage d'une rangée de dents (12, 13) d'un élément d'engrenage à denture rectiligne à l'aide d'une fraise (10) qui peut tourner autour d'un axe de fraise (21) et présente sur sa périphérie des plaquettes de coupe (5) interchangeables disposées de manière à s'engager dans les interstices (16) entre dents adjacentes (12, 13) ou à générer ces interstices lorsque l'on approche la fraise (10) au niveau de l'élément d'engrenage, **caractérisé en ce que** l'on utilise une fraise dans laquelle les plaquettes de coupe, à l'état monté sur la fraise, présentent au moins une arête de coupe (8a, b) s'étendant radialement et perpendiculairement à l'axe de fraise, l'axe de fraise étant, lors du fraisage du profil de dent, orienté dans un plan perpendiculaire à l'étendue longitudinale du dos de dent et, pendant la plongée des plaquettes de coupe (5), en rotation autour de l'axe de fraise, dans la surface ou dans les entredents d'un élément d'engrenage. pivoté dans ce plan sur une plage angulaire qui recouvre la plage de toutes les normales à la surface de profil (12a,b; 13a,b) de la dent (12, 13) à fabriquer.

2. Procédé selon la revendication 1, **caractérisé en ce que**, lors de la plongée et du pivotement de la fraise en rotation et des plaquettes de coupe, l'élément d'engrenage est déplacé en translation en direction de la rangée de dents ou tourne autour d'un axe de l'élément d'engrenage dans la mesure où l'élément d'engrenage est une roue dentée.

3. Procédé selon l'une des revendications 1 ou 2, **caractérisé en ce que** les plaquettes de coupe font saillie radialement de la périphérie externe du corps de base de la fraise et présentent, sur des faces opposées, des arêtes de coupe (8a, b) parallèles, perpendiculaires à l'axe de fraise, les arêtes de coupe opposées étant utilisées chacune successivement pour produire les flancs de dents adjacentes (12, 13) opposés au niveau d'un entredent.

4. Procédé selon la revendication 3, **caractérisé en ce que** les plaquettes de coupe présentent en outre une arête de coupe (9) qui se situe dans une surface cylindrique autour de l'axe de fraise et présente des composantes parallèles à l'axe de fraise (21), ladite arête de coupe supplémentaire servant à générer la base de l'entredent, en approchant la fraise de l'élément d'engrenage radialement et perpendiculairement au plan défini par deux dos de dent adjacents, l'axe de fraise étant respectivement perpendiculaire à un segment de surface du profil de dent en cours de réalisation.

5. Procédé selon l'une des revendications 1 à 4, **caractérisé en ce que** le profil de dent délimitant un entredent est réalisé selon les étapes suivantes :
a) réalisation d'une rainure dans la surface cylindrique d'une ébauche de roue dentée (20), la fraise séparant la surface parallèlement à l'axe (15) de la roue dentée (20) à l'aide du cercle de coupe des plaquettes de coupe sur une profondeur correspondant à la hauteur de dent,
b) retrait de la fraise hors de la rainure et avance dans une position axiale du dos de dent le long de laquelle le profil doit être créé, au niveau de la pointe d'une dent délimitant la rainure ou un entredent correspondant, la roue dentée étant tournée dans une position et la fraise asservie de manière correspondante de sorte que les arêtes de coupe (8) de la fraise sont perpendiculaires à une normale sur la partie d'extrémité radialement extérieure du profil,
c) rotation de la roue dentée et asservissement simultané de la fraise par translation axiale et radiale, l'axe de fraise conservant son orientation dans l'espace et le profil de la dent étant créé en continu.

6. Procédé selon l'une des revendications 1 à 5, **caractérisé en ce que** le processus de plongée et de pivotement est répété dans au moins un autre plan parallèle au premier plan.

7. Procédé selon l'une des revendications 1 à 4, **caractérisé en ce que** le dos de dent s'étend sur une surface conique qui est inclinée par rapport à l'axe de la surface conique.

8. Procédé selon la revendication 7, **caractérisé en ce que** l'angle de la surface conique, mesuré par rapport à l'axe du cône, est compris entre 0 et 90°, de préférence entre 10° et 80°.

9. Procédé selon la revendication 7 ou 8, comprenant les étapes suivantes :
a) réalisation d'une rainure dans la surface conique d'une ébauche de roue dentée (20), en ce que la fraise sépare la surface à l'aide du cercle de coupe des plaquettes de coupe sur une profondeur correspondant à la hauteur de dent avec un angle d'inclinaison par rapport à l'axe du cône qui correspond à l'angle de cône de la base de la dent d'une roue conique à fabriquer,
b) retrait de la fraise hors de la rainure et avance du cercle de coupe de la fraise dans une position axiale du dos de dent au niveau de laquelle le profil doit être réalisé, au niveau de la pointe d'une dent délimitant la rainure ou un entredent correspondant, la roue dentée tournant autour de l'axe de cône et la fraise étant asservie de manière correspondante de sorte que les arêtes de coupe (8) de la fraise sont perpendiculaires à une normale sur la partie d'extrémité radialement extérieure du profil,
c) rotation de la roue dentée et asservissement simultané de la fraise par translation axiale et radiale, rapportée à l'axe de la fraise, l'axe de fraise conservant son orientation dans l'espace et le profil de la dent étant créé en continu.

10. Procédé selon la revendication 9, **caractérisé en ce que** la translation axiale et radiale de la fraise, rapportée à l'axe de la fraise, correspond à un mouvement circulaire autour d'une pointe de cône, située sur l'axe de cône, des surfaces coniques de la roue conique à fabriquer, l'axe de la fraise s'étendant de manière respectivement parallèle à une tangente à la surface conique.

11. Fraise destinée à la fabrication de profils de dents par un procédé selon l'une des revendications 1 à 10, comprenant un corps de base rotatif, symétrique en rotation, et des évidements sur une périphérie du corps de base, dans lesquels sont logées des plaquettes de coupe, les plaquettes de coupe présentant des arêtes de coupe situées dans un plan radial et s'étendant radialement, lesquelles s'étendent en direction radiale d'au moins 6 mm au-delà de la surface périphérique de la partie du corps de base pourvue des évidements, **caractérisée en ce que** la fraise est équipée de plaquettes de coupe selon l'une des revendications 12 ou 13.

12. Plaquette de coupe pour fraise selon la revendication 11, à utiliser dans un procédé selon l'une des revendications 1 à 6, dans laquelle la plaquette de coupe est conçue sous la forme d'un outil de coupe amovible tangentiel qui, en vue de dessus sur la surface libre, a une forme de parallélogramme oblong d'une longueur dépassant la largeur d'au moins le double et pourvu d'un alésage de fixation central, le bord de l'alésage de fixation étant distant d'au moins 12 mm des extrémités dans la direction longitudinale du parallélogramme.

13. Plaquette de coupe selon la revendication 12, **caractérisée en ce que** la plaquette de coupe présente, sur au moins 8 mm de ses parties de coupe prévues sur les extrémités longitudinales du parallélogramme, une face de coupe tangentielle pourvue de deux arêtes de coupe parallèles et de surfaces libres adjacentes qui forment avec la face de coupe un angle inférieur à 90 degrés.

14. Procédé de fraisage d'une rangée de dents (12, 13) d'un élément d'engrenage à denture rectiligne, dans lequel l'élément d'engrenage est une roue conique, à l'aide d'une fraise (10) qui peut tourner autour d'un axe de fraise (21) et qui présente sur sa périphérie des plaquettes de coupe (5) interchangeables disposées de manière à s'engager dans les interstices (16) entre dents adjacentes (12, 13) ou à générer ces interstices lorsque l'on approche la fraise (10) de l'élément d'engrenage, **caractérisé en ce que** l'on utilise une fraise *dans laquelle les plaquettes de coupe, à l'état monté sur la fraise, présentent au moins* une arête de coupe (8a, b) s'étendant radialement et perpendiculairement à l'axe de fraise, l'axe de la fraise étant, lors du fraisage du profil de dent, orienté dans un plan perpendiculaire à un bord d'un dos de dent (2, 13) délimitant la surface de profil souhaitée et, pendant la plongée des plaquettes de coupe (5), en rotation autour de l'axe de fraise, dans la surface ou les entredents d'un élément d'engrenage, pivoté dans ce plan sur une plage angulaire qui recouvre la plage de toutes les normales à la surface de profil (12a,b; 13a,b) de la dent à fabriquer (12, 13).
